# EUROPEAN PATENT APPLICATION

(11) **EP 4 226 817 A1**
(43) Date of publication of application: **16.08.2023**
(21) Application number: 21880424.3
(22) Date of filing: 08.10.2021
(51) Int. Cl.: A47J 27/08, A47J 27/086, A47J 36/08, A47J 36/24

(54) **VACUUM COOKING CONTAINER AND VACUUM LOW-TEMPERATURE COOKING DEVICE**

(30) Priority: 12.10.2020 KR 20200130921
(71) Applicant: Jeon, Ji Eun, Incheon 21641 (KR)
(72) Inventor: JEON, Ji Eun, Incheon 21641 (KR); YOSHIMATS, Hokori, Aichi 476-0003 (KR)
(74) Representative: Global IP Europe Patentanwaltskanzlei
(86) International application number: PCT/KR2021/013891
(87) International publication number: WO 2022/080777

(57) **Abstract**

The present invention relates to a vacuum cooking container and a vacuum low-temperature cooking device which, by cooking food materials at a low temperature under vacuum, allow the food materials to be cooked in a state in which an excellent mouthfeel (texture), taste, and aroma can be enjoyed, while preserving nutrients and moisture in the food materials as much as possible, wherein the vacuum cooking container is characterized by comprising a tubular container body of which the top is open, and a lid for opening and closing the open top of the container body, wherein a seal which is formed when the open top of the container body is covered with the lid and which seals an inner space of the vacuum cooking container is interposed at a contact portion between the container body and the lid, and an exhaust unit that communicates the inner space of the vacuum cooking container with the outside is provided in the container body.

## Description

### [Technical Field]

The present disclosure relates to a technology for cooking food at a low temperature under a vacuum in which a negative pressure lower than atmospheric pressure is applied, and more particularly, a vacuum cooking container and a vacuum low-temperature cooking device which are capable of preserving nutrients and moisture in the food materials as much as possible and cooking the food materials to allow users to enjoy excellent mouthfeel (texture), taste and smell.

### [Background Art]

In the traditional cooking method, by which food materials is cooked at a high temperature of 100°C or higher under atmospheric pressure (1 atm), the following issues are raised depending on the type of food materials.

For example, in the case of meat, cooking meat at a high temperature by, for example, baking or boiling may result in tough and hard texture, reduce the volume of the meat, and make the meat less juicy. Specifically, if the meat is boiled in water, vitamins such as thiamine (vitamin B1) or niacin (vitamin B3) and minerals are released in large amounts into water. If the meat is grilled over fire, carcinogens may be produced along with the loss of nutrients (vitamin, etc.). In particular, protein, which is one of the five major nutrients and the main ingredient of meat, is denatured by heat. As is widely known, food proteins exist in the form of a band-shaped primary structure, secondary structures of alpha-helix and beta-sheet, and tertiary and quaternary structures formed to have a unique three-dimensional shape by interaction of many secondary structures, and are denatured at 60°C to 70°C.

In the case of vegetables, if the vegetables are boiled in water, nearly half of the water-soluble vitamins escape to water, and the vegetables may lose the ability to remove active oxygen.

Therefore, as a method to address the issues raised in high-temperature heating and cooking, a vacuum low-temperature cooking method has emerged, and a cooking device capable of effectively carrying out the vacuum low-temperature cooking method has been actively developed.

In sous-vide cooking, which is an example of a vacuum low-temperature cooking method, food materials are put in a plastic bag, and air is removed from the plastic bag to seal the plastic bag in a vacuum state. Then, the plastic bag is placed in a water tank at a constant temperature (50-65°C) for a predetermined time (e.g., 72 hours) to cook the food materials over a long period of time at a temperature that does not denature proteins.

Therefore, in order to cook food materials by the sous-vide method, a vacuum packaging device and sous-vide-dedicated equipment are required. In general, the sous-vide-dedicated equipment has a water tank, a temperature sensor, a water circulator, a heater, and a timer.

Food materials are packaged in a vacuum state in the sous-vide recipe for the following reason. If food materials are put in water without being packaged, the unique aroma and nutrients of the food materials may be lost to the water. In addition, when the food materials are cooked at a low temperature for a long time, issues such as bacterial growth may occur.

In addition, with the sous-vide recipe, bad smells such as the smell of fat or fishy smell cannot be removed at all because the food materials are cooked in a completely sealed state. The bad smell of the food materials tends to be intensified due to vacuum packaging.

Any documents that disclose technologies similar to the present disclosure have not been found in a brief survey of patent documents and other materials. Patent Documents 1 and 2 are briefly introduced below as reference materials.

Patent Document 1 discloses a vacuum cooker an inner case defining a cooking chamber, a heater configured to cook food accommodated in the cooking chamber, an outer case spaced apart from the inner case by a predetermined distance, an insulation space formed between the inner case and the outer case, a vacuum pump configured to decompress the cooking chamber and the vacuum pump, a first vacuum valve configured to control communication between the cooking chamber and the vacuum pump, a second vacuum valve configured to control communication between the insulation space and the vacuum pump, a first intake valve configured to control communication between the cooking chamber and outside air, a second intake valve configured to control communication between the insulation space and the outside air, and a pedestal supporting the inner case and outer case. The document discloses that the vacuum cooker is capable of both storing and cooking food by the aforementioned configuration

Patent Document 2 discloses a sous vide-based cooking appliance including a housing having a container mount and a vacuum packaging module mount disposed adjacent to each other, a first container coupled to the container mount and having a fluid accommodation space formed therein, a heater configured to heat fluid in the fluid accommodation space of the first container, a vacuum pressure generator arranged on the vacuum packaging module mount to suction air from a food packaging container, and a vacuum packaging module arranged in the vicinity of the vacuum pressure generator and having a sealing heater configured to seal the food packaging container by heating.

### [Prior Art Literature]

### [Patent Documents]

Patent Document 1: Korean Patent Application Publication No. 10-2005-0031287
Patent Document 2: Korean Patent No. 10-1885870

### [Disclosure]

### [Technical Solution]

A vacuum cooking container according to the present disclosure consists of a barrel-shaped container body having an open top and a lid arranged to open and close the open top of the container body.

The container body and the lid may be fitted to each other. Alternatively, one side of the lid may be hinged to one side of the container body and the other side of the lid may be fixed to or released from the other side of the container body by a locking means such as a hook. Alternatively, both sides of the lid may be fixed or released by locking means provided on both sides of the container body. In other words, there is no particular limitation on how the lid is coupled to the container body (to be opened and closed).

According to one embodiment of the present disclosure, the container body has, on a portion of a sidewall thereof, an exhaust unit allowing the inside and outside of the container body to communicate with each other therethrough. The exhaust unit includes a nozzle mounted in a through hole formed in a portion of the sidewall of the container body from an outer surface side of the sidewall, a holding plate having an exhaust guide hole formed(perforated) in a portion thereof corresponding to the nozzle and fixed to an inner surface of the sidewall of the container body, and a membrane interposed and fixed between the inner surface of the sidewall of the container body and the holding plate, the membrane being provided with a communication hole formed in a portion thereof corresponding to the nozzle and having a diameter smaller than a diameter of a flow path of the nozzle..

In the present disclosure, the membrane is formed of a thin material such as synthetic resin or elastomer (plastic having elasticity) in the form of a film or sheet. Accordingly, when food materials are cooked under vacuum and low temperature, the diameter of the communication hole varies according to a magnitude of a pressure difference between an internal pressure of the vacuum cooking container, which changes over time, and an external pressure (vacuum pressure) surrounding the vacuum cooking container.

When the pressure difference is zero or is less than or equal to a certain value, the diameter of the communication hole does not change. In the present disclosure, the diameter of the communication hole given at this time is referred to as a "reference diameter." When the pressure difference is greater than the certain value, the diameter of the communication hole gradually increases in proportion to the magnitude of the pressure difference. In the present disclosure, the upper limit of the diameter at which the communication hole is not destroyed is referred to as the "maximum diameter." Further, in the present disclosure, the diameter of the communication hole that changes in the range of the reference diameter to the maximum diameter according to the magnitude of the pressure difference is referred to as a "variable diameter."

In the vacuum cooking container according to the present disclosure, when the lid is coupled to the open top of the container body, the portion of the exhaust unit other than the flow path of the exhaust unit is kept airtight such that steam flows from the inside of the vacuum cooking container to the outside only through the flow passage (flow path + communication hole + exhaust guide hole) of the exhaust unit.

Next, a vacuum low-temperature cooking device according to the present disclosure is configured in a structure in which one or more heating plates equipped with heaters (heating elements) are disposed in a vacuum cooking chamber, and one or more vacuum cooking containers are disposed on the upper surface of each of the heating plates. When the vacuum pump is driven such that negative pressure (vacuum pressure) is applied to the vacuum cooking chamber and power is supplied to the heater, while food materials and liquid such as water or sauce (seasoning liquid) are contained in the vacuum cooking container, the temperature of the vacuum cooking container is increased by the heat transfer from the heating plate having the heater.

Therefore, as the temperature of the vacuum cooking container rises, when the liquid (moisture) in the vacuum cooking container undergoes phase change to steam at a temperature significantly lower than 100°C (the boiling point at the atmospheric pressure) and the volume thereof expands, the internal pressure of the vacuum cooking container becomes higher than the vacuum pressure of the vacuum cooking chamber and lower than the atmospheric pressure. Accordingly, the food materials in the vacuum cooking container are cooked at a low temperature in a vacuum.

When vacuum pressure is applied to the vacuum cooking chamber, the vacuum cooking container placed on the top surface of the heating plate is lifted. In this case, the heat of the heater is not transmitted to the vacuum cooking container or a smaller amount of heat than the intended amount is transferred.

Therefore, the vacuum low-temperature cooking device according to the present disclosure includes a close contact unit configured to bring the vacuum cooking container into close contact with the top surface of the heating plate when vacuum pressure is applied to the vacuum cooking chamber such that the gap is not formed between the vacuum cooking container and the heating plate. As an example of the close contact unit, an airbag is mentioned in the embodiments described later, but the present disclosure does not be limited thereto. The close contact unit may be completely fixed to the vacuum low-temperature cooking device, or may be a detachable structure that can be separated as needed. In addition, the close contact unit may be disposed above the lid of the vacuum cooking container at a distance from the lid.

In the vacuum low-temperature cooking device according to the present disclosure, when steam is generated from the food materials or liquid contained in the vacuum cooking container and thus the internal pressure of the vacuum cooking container increases, the steam is discharged from the vacuum cooking container to the vacuum cooking chamber through the flow path of the exhaust unit provided on the sidewall of the container body of the vacuum cooking container such that the pressure difference between the internal pressure of the vacuum cooking container and the vacuum pressure applied to the vacuum cooking chamber is maintained within a certain range or the pressure difference decreases gradually. In addition, air is periodically or continuously discharged from the vacuum cooking chamber such that the vacuum pressure of the vacuum cooking chamber is kept constant.

The vacuum low-temperature cooking device according to the present disclosure may include a vacuum gauge configured to detect the pressure in the vacuum cooking chamber and a temperature gauge configured to detect the temperature of the heating plate.

In addition, the vacuum low-temperature cooking device according to the present disclosure has a concavo-convex pattern formed on the inner surface of the vacuum cooking container that contacts the food materials, such that grill marks or the like may be applied to the surface of the food materials during the cooking process.

In addition, the vacuum low-temperature cooking device according to the present disclosure includes a taste enhancement unit capable of enhancing the taste of the food materials by heating the food materials for a relatively short time (tens of seconds to 10 minutes) before the food materials cooked under vacuum and low temperature are ingested.

In addition, the vacuum low-temperature cooking device according to the present disclosure may include one or more vacuum pumps. Also, a bypass line may be connected to an exhaust line (vacuum line) connecting the vacuum cooking chamber and the vacuum pumps, and one or more valves may be arranged on the exhaust line.

Other features of the vacuum cooking container and the vacuum low-temperature cooking device according to the present disclosure will become apparent from the embodiments disclosed below.

### [Description of Drawings]

FIG. 1 is an external perspective view showing a vacuum cooking container with a lid closed according to an embodiment of the present disclosure.
FIG. 2 is a cross-sectional view showing a detailed structure of an exhaust unit of the vacuum cooking container according to an embodiment of the present disclosure.
FIG. 3 is an exploded perspective view showing a membrane of the exhaust unit and a holding plate of the vacuum cooking container according to an embodiment of the present disclosure before being fixed to a sidewall of a container body.
FIG. 4 is an external perspective view showing a vacuum low-temperature cooking device according to an embodiment of the present disclosure.
FIG. 5 is an external perspective view showing a vacuum low-temperature cooking device according to another embodiment of the present disclosure, with a door positioned in an open state.
FIG. 6 is a view illustrating an operation state of each part and a process of changing the steak when the steak is cooked in the vacuum low-temperature cooking device according to the present disclosure.
FIG. 7 is a view showing the structure of a vacuum low-temperature cooking device according to another embodiment of the present disclosure.

### [Best Mode]

Hereinafter, an embodiment of a vacuum cooking container and a vacuum low-temperature cooking device according to the present disclosure will be described with reference to the accompanying drawings.

### <Embodiment of vacuum cooking container>

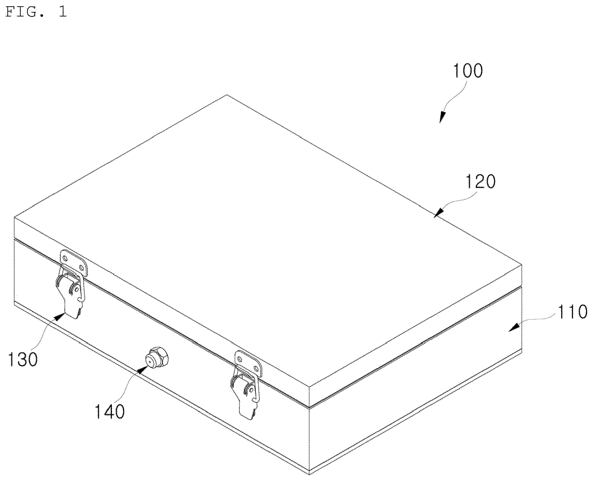

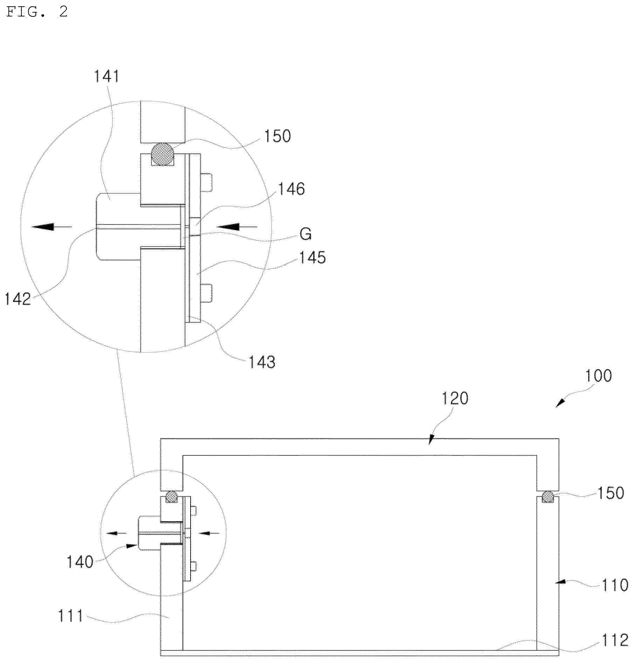

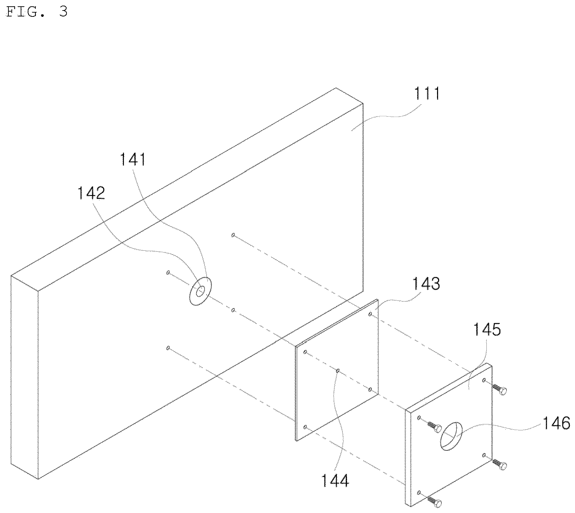

FIGS. 1 to 3 illustrate a vacuum cooking container 100 according to an embodiment of the present disclosure.

In this embodiment, the vacuum cooking container 100 consists of a rectangular-barrel shaped container body 110 having an open top, and a lid 120 for opening and closing the top of the container body 110.

The container body 110 and the lid 120 may have a planar shape other than a rectangular shape.

The container body 110 and the lid 120 may be formed of metal or synthetic resin. The container body 110 and the lid 120 may be formed of the same material or different materials.

In this embodiment, the container body 110 and the lid 120 are fixed to or released from each other by locking means 130 provided on both long sides thereof, and an airtight seal 150 is interposed between contact portions of the container body 110 and the lid 120.

In addition, while food materials are being cooked, a concavo-convex pattern may be formed on a bottom plate 112 of the container body 110 such that a grill-shaped mark or the like is formed on the surface of the food materials.

In this embodiment, the sidewall 111 of the container body 110 is provided with an exhaust unit 140 allowing the inside of the container body 110 to communicate with the outside.

The exhaust unit 140 includes a nozzle 141 mounted from the outer surface of the sidewall 111 relative to a through hole formed in a part of the sidewall 111 of the container body 110, a holding plate 145 having an exhaust guide hole 146 formed in a portion thereof corresponding to the nozzle 141 and fixed to the inner surface of the sidewall 111 of the container body 110, and a membrane 143 interposed between the inner surface of the sidewall 111 of the container body 110 and the holding plate 145 and provided with a communication hole 144 formed in a portion thereof corresponding to a flow path 142 of the nozzle 141 and having a smaller diameter than the flow path 142.

In this embodiment, the flow path 142 of the nozzle 141, the communication hole 144 of the membrane 143, and the exhaust guide hole 146 of the holding plate 145 form a single flow path through which steam can be discharged. As for the size (diameter) of the holes, the exhaust guide hole 146 is the largest, and the flow path 142 is slightly larger than the communication hole 144.

The material of the membrane 143 may be formed of a material having elastic resilience and a thin thickness such as a synthetic resin sheet or an elastomer film, and the holding plate 145 may be formed of a material such as a metal plate or a synthetic resin plate.

When the material of the membrane 143 and the material of the holding plate 145 are weldable to each other by heat or ultrasonic waves, the membrane 143 and the holding plate 145 may be integrally manufactured.

In this embodiment, a gap G having a predetermined dimension is present between the membrane 143 and an inner end of the nozzle 141.

If the internal pressure of the vacuum cooking container 100 is higher than the external pressure of the vacuum cooking container 100 when food materials are cooked under vacuum and low temperature, a portion of the thin membrane 143 formed of a flexible material that is exposed through the exhaust guide hole 146 bulges toward the inner end of the nozzle 141 due to the internal pressure of the vacuum cooking container 100. Such expansion of the membrane 143 ends when the inner end of the nozzle 141 comes into contact with the peripheral portion of the communication hole 144 of the membrane 143.

Therefore, depending on the size of the set gap G, the maximum diameter to which the communication hole 144 of the membrane 143 may be increased is limited. In addition, the gap G may delay the time until the steam generated during the cooking process is completely discharged from the vacuum cooking container 100, preventing the humidity in the vacuum cooking container 100 from rapidly decreasing and allowing the food materials to be cooked in a moisturized state.

The variable diameter of the communication hole 144 of the membrane 143 elastically restored between a reference diameter and the maximum diameter varies depending on the material of the membrane 143, but is generally 0.2 to 1 mm, preferably 0.2 to 0.6 mm.

### <Embodiment of vacuum cold cooking device>

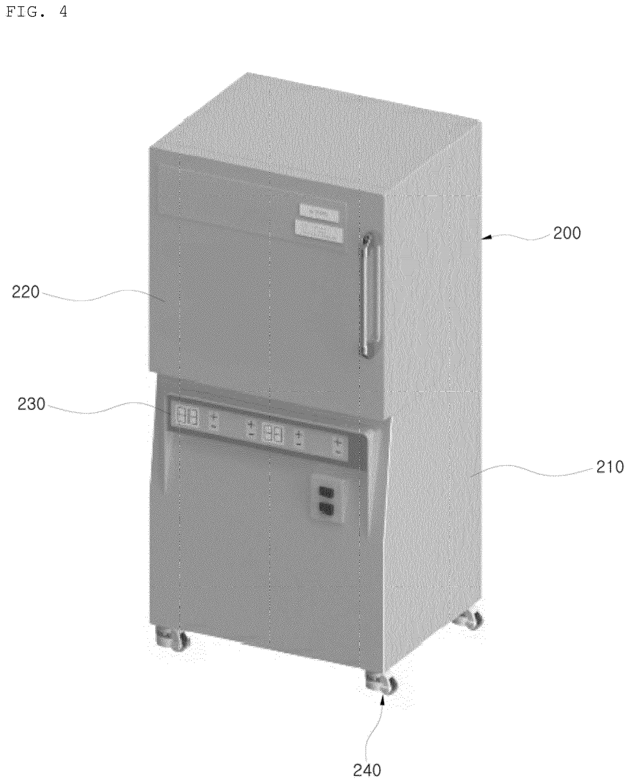

FIGS. 4 to 7 show embodiments of a vacuum low-temperature cooking device 200 according to the present disclosure, which may include a cabinet 210 having a vacuum cooking chamber VC, a heating plate 250 disposed in the vacuum cooking chamber VC, a vacuum pump configured to apply vacuum pressure to the vacuum cooking chamber VC, a close contact unit 270 configured to expand when vacuum pressure is applied to the vacuum cooking chamber VC and contract when vacuum pressure is released, and a control unit 230 configured to control the operation states of the heating plate 250 and the vacuum pump.

In addition, multiple heating plates 250 may be arranged in multiple rows and/or in multiple stages in the vacuum cooking chamber VC.

Hereinafter, each embodiment will be described based on the drawings.

### First embodiment

In the first embodiment, the cabinet 210 of the vacuum low-temperature cooking device 200 is divided into two parts: an upper compartment and a lower compartment.

In the upper compartment, a vacuum cooking chamber opened and closed by the door 220 is provided. In addition, a heating plate and a close contact unit, which will be described in detail in the third embodiment, are provided. Also, a vacuum gauge (not shown) configured to detect pressure in the vacuum cooking chamber and a temperature sensor (not shown) configured to detect temperature of the heating plate are provided.

A vacuum pump not shown is disposed in the lower compartment.

In addition, the control unit 230 is provided on a front surface of the lower compartment of the cabinet 210, and position shift and fixing mechanisms 240 are each provided at four positions (edges) on a bottom surface of the lower compartment.

The control unit 230 may include multiple buttons with different functions, a timer configured to set a cooking time, a display configured to display detected values of the vacuum gauge and the temperature sensor as numerical values.

### Second embodiment

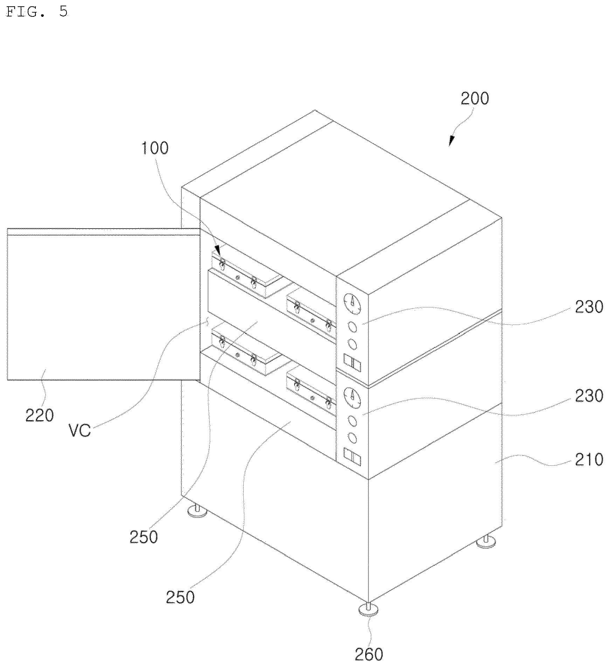

In the vacuum low-temperature cooking device 200 shown in FIG. 5, the interior of the integrated cabinet 210 is divided into an upper space and a lower space.

A vacuum cooking chamber VC is provided in the upper space, and is opened and closed by the door 220.

The control units 230 having the same elements are provided in two upper and lower stages on one side part of the upper front surface of the cabinet 210 (a part that does not interfere with the door 220).

A vacuum pump (not shown) is embedded in the lower space, and height-adjustable fixing mechanisms 260 used to level the vacuum low-temperature cooking device 200 are provided at four positions (corners) at the bottom of the cabinet 210.

In addition, two heating plates 250 are provided up and down in the vacuum cooking chamber (VC). Two vacuum cooking containers 100 are disposed on each of the heating plate 250.

In addition, the close contact units, which will be described in detail in the third embodiment, are provided on the bottom surface of the heating plate 250 disposed on the upper side of the two heating plates and the bottom surface of the upper plate of the cabinet 210, respectively.

### Third embodiment

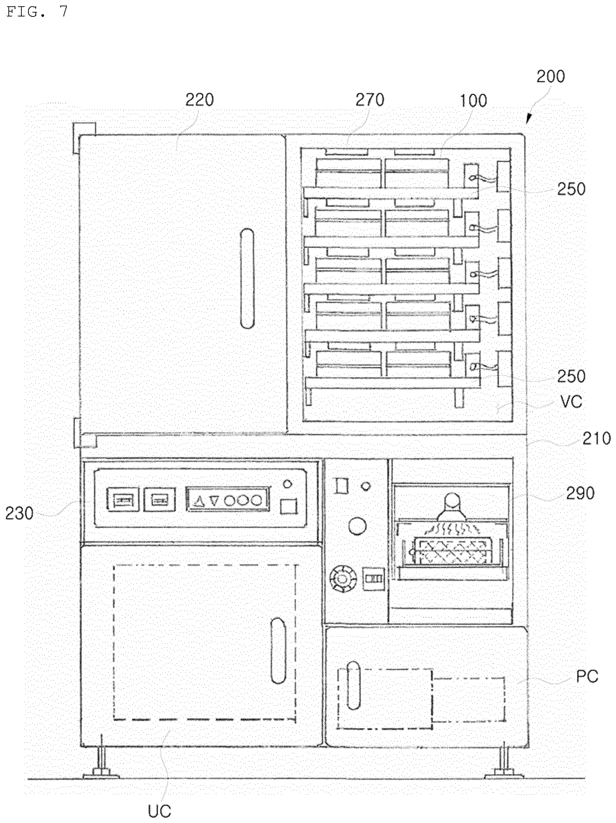

In the vacuum low-temperature cooking device 200 shown in FIG. 7, the interior of the cabinet 210 is divided into five spaces. The cabinet 210 may be an integrated element or may be an assembly that may be separated into two or more compartments.

In the third embodiment, two vacuum cooking chambers VC are disposed in the upper part of the cabinet 210, and three spaces are provided in the lower part of the cabinet 210 to arrange a utility chamber UC, a vacuum pump chamber PC, and a taste enhancement unit 290.

In one vacuum cooking chamber VC where the door 220 is open, five heating plates 250 spaced apart from each other are arranged in five upper and lower stages, and two columns of vacuum cooking containers 100 are arranged on each of the heating plates 250.

In the other vacuum cooking chamber VC, which is covered by the open door 220 of the one vacuum cooking chamber VC, the heating plates 250 may be provided in four upper and lower stages. That is, the vacuum cooking chambers VC may have the same number or different numbers of heating plates 250.

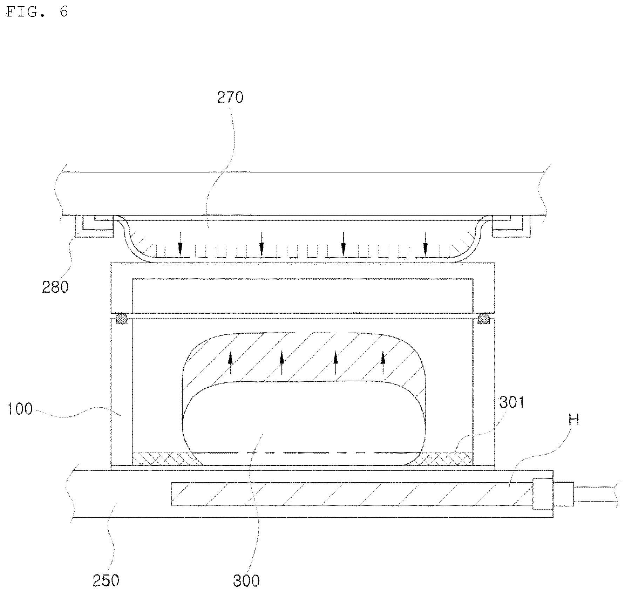

As shown in FIG. 6, the heating plate 250 is provided with a heater H.

The number of heaters H provided per heating plate 250 may be determined as desired.

In addition, a close contact unit 270 is disposed above each vacuum cooking container 100. In the case where an airbag charged at a certain pressure such that gas such as air cannot enter or exit is adopted as the close contact unit 270, a clamp 280 or the like may be provided on the bottom surface of the heating plate 250 or the bottom surface of the top plate of the cabinet 210 such that the airbag may be attached or detached. Alternatively, an airbag into which gases may be introduced through an air tube provided with a valve may be employed.

Examples of the taste enhancement unit 290 include a microwave oven or an oven.

### <Change of food materials during vacuum low-temperature cooking and operation of each part of the device>

FIG. 6 is a view microwave the operation of each part of the device and the change of a food material 300 when the food material 300 is cooked using the vacuum cooking container 100 and the vacuum low-temperature cooking device according to the present disclosure. It is assumed that the food material 300 is steak (meat).

First, the vacuum cooking container 100 containing the food material 300 is placed on the top surface of the heating plate 250 in the vacuum cooking chamber, and then the door of the vacuum cooking chamber is closed to seal the vacuum cooking chamber.

Subsequently, the cooking time and cooking temperature are set by operating the control unit, and the vacuum pump is operated.

Thereby, vacuum pressure is applied to the vacuum cooking chamber, and the heater H of the heating plate 250 generates heat to increase the temperature of the vacuum cooking container 100 to the set cooking temperature. At this time, the airbag, which is the close contact unit 270, expands, and the vacuum cooking container 100 placed on the top surface of the heating plate 250 is pressed so as not to be lifted.

Air is continuously discharged from the vacuum cooking chamber until the pressure in the chamber reaches the set vacuum pressure. In this process, air in the vacuum cooking container 100 is sucked into the vacuum cooking chamber through the exhaust unit, and the internal pressure of the vacuum cooking container 100 becomes negative pressure (vacuum pressure).

When the pressure in the vacuum cooking container 100 changes to negative pressure, the gap between the root tissues of the food material 300 contained in the vacuum cooking container 100 widens, and the volume of the food material apparently increases by 30% to 40% compared to the volume at atmospheric pressure.

Therefore, when a liquid such as water or seasoning liquid 301 is added together with the food material 300, the seasoning liquid or the like may easily penetrate into the food material 300.

For the set cooking time, the internal pressure of the vacuum cooking container 100 is constantly maintained higher than the negative pressure applied to the vacuum cooking chamber. In general, the vacuum pressure applied to the vacuum cooking chamber is about 5% of the atmospheric pressure, and the internal pressure of the vacuum cooking container 100 is about 10% to 15% of the atmospheric pressure.

When the set cooking time is over, the negative pressure of the vacuum cooking chamber is released to restore atmospheric pressure, power supplied to the heater H is interrupted, and the original volume of the airbag, which is the close contact unit 270, is restored from the expanded state.

Thereafter, by opening the door of the vacuum cooking chamber and drawing out the vacuum cooking container 100, all processes of vacuum low-temperature cooking are terminated, and the food material expanded under negative pressure restores its original volume.

Although embodiments illustrating the technical idea of the present disclosure have been described above, it will be well understood by those skilled in the art that various changes and modifications can be made to the present disclosure without departing from the scope of the technical idea disclosed in the description and claims of the present disclosure.

As a variation, when the cabinet is an assembly that can be separated into two or more compartments (e.g., a first compartment and a second compartment), the compartments may be arranged side by side rather than being arranged in a vertical direction. Likewise, when the interior of the cabinet is an integrated part divided into two or more spaces (for example, a first space and a second space), the spaces may also be arranged side by side rather than being arranged in a vertical direction.

As another variation, the close contact unit may be a pneumatic cylinder mechanism or the like.

In addition, the food material to be cooked may be in powder form, and may be mixed with the seasoning liquid in cooking.

Therefore, all such appropriate changes, modifications and equivalents should also be considered to be within the scope of the present disclosure.

### [List of reference numerals]

100...Vacuum Cooking Container
110...Container Body
111...Sidewall 112...a floorboard
120...Lid.
130...Locking Means
140...Exhaust Unit
141...Nozzle 142...Flow path
143... Membrane 144... Communication Hole
145...Holding Plate 146...Exhaust Guide Hole
G...Gap
150... Seal
200...Vacuum Low-Temperature Cooking Device
210...Cabinet
VC...Vacuum Cooking Chamber
220...Door
230...Control Unit
240...Position Shift and Fixing Mechanism
250...Heating Plate
H...Heater
260...Height-Adjustable Fixing Mechanism
270...Close Contact Unit
280...Clamp
290...Taste Enhancement Unit
UC...Utility Chamber
PC...Vacuum Pump Chamber
300...Food Material
301...Seasoning Liquid

## Claims

1. A vacuum cooking container disposed in a vacuum cooking chamber of a vacuum low-temperature cooking device and allowing food materials to be cooked therein at a low temperature under vacuum, the vacuum cooking container comprising:
a barrel-shaped container body having an open top; and
a lid arranged to open and close the open top of the container body,
wherein the container body comprises a bottom plate and a sidewall,
wherein a seal is interposed between contact portions of the container body and the lid to seal an inner space of the vacuum cooking container formed when the open top of the container body is covered with the lid, and
wherein an exhaust unit allowing the inner space of the vacuum cooking container to communicate with an outside therethrough is provided in a portion of the sidewall of the container body.

2. The vacuum cooking container of claim 1, wherein the exhaust unit comprises:
a nozzle mounted in a through hole formed in a portion of the sidewall of the container body;
a holding plate having an exhaust guide hole formed in a portion thereof corresponding to the nozzle and fixed to an inner surface of the sidewall of the container body; and
a membrane interposed between the inner surface of the sidewall of the container body and the holding plate, the membrane being provided with a communication hole having a diameter smaller than a diameter of a flow path of the nozzle,
wherein a gap of a certain size is present between the membrane and an inner end of the nozzle,
wherein the diameter of the communication hole formed in the membrane varies according to a magnitude of a pressure difference between an internal pressure of the vacuum cooking container and an external pressure surrounding the vacuum cooking container, the internal pressure changing during cooking of the food materials at the low temperature under vacuum.

3. A vacuum low-temperature cooking device capable of cooking food materials at a low temperature under vacuum using the vacuum cooking container of claim 1 or 2, the device comprising:
a cabinet configured as an assembly divided into a first compartment and a second compartment or as an integrated part having an interior divided into a first space and a second space;
a vacuum cooking chamber provided in the first compartment or the first space and opened and closed by a door;
a heating plate disposed in the vacuum cooking chamber;
a vacuum pump disposed in the second compartment or the second space and configured to apply vacuum pressure to the vacuum cooking chamber through an exhaust line;
a close contact unit arranged in the first compartment or the first space or on the heating plate, the close contact unit being configured to apply a pressing pressure to the vacuum cooking container when the vacuum pressure is applied to the vacuum cooking chamber such that the vacuum cooking container closely contacts the heating plate and to remove the pressing pressure when the vacuum pressure is released; and
a control unit configured to control operation of the heating plate and the vacuum pump.

4. The device of claim 3, further comprising:
a taste enhancement unit or a utility chamber provided in the second compartment or the second space,
wherein the close contact unit is detachable from the first compartment or the first space or the heating plate.
